**Europäisches Patentamt**

**European Patent Office**

**Office européen des brevets**

(19)

(11) Veröffentlichungsnummer: **0 028 395**
**B1**

(12)

# EUROPÄISCHE PATENTSCHRIFT

(45) Veröffentlichungstag der Patentschrift:
26.02.86

(51) Int. Cl.⁴: **A 01 D 90/04**

(21) Anmeldenummer: **80106646.5**

(22) Anmeldetag: **29.10.80**

(54) Schneidvorrichtung an einem Halmgut-Förderkanal.

(30) Priorität: **05.11.79 DE 2944643**

(43) Veröffentlichungstag der Anmeldung:
**13.05.81 Patentblatt 81/19**

(45) Bekanntmachung des Hinweises auf die Patenterteilung:
**26.02.86 Patentblatt 86/9**

(84) Benannte Vertragsstaaten:
**AT CH FR GB IT LI NL**

(56) Entgegenhaltungen:
**DE - A - 1 657 648**
**DE - A - 1 916 046**
**DE - A - 2 734 462**
**DE - B - 1 257 473**
**DE - U - 7 836 824**

(73) Patentinhaber: **Klöckner-Humboldt-Deutz AG**
**Zweigniederlassung Fahr, D-7702 Gottmadingen (DE)**

(72) Erfinder: **Bottlang, Erwin, Boelckestrasse 2,**
**D-7760 Radolfzell (DE)**

(74) Vertreter: **Patentanwälte Leinweber & Zimmermann,**
**Rosental 7/II Aufg., D-8000 München 2 (DE)**

## Beschreibung

Die Erfindung bezieht sich auf eine Schneidvorrichuntung an einem dem Transport von Halmgut dienenden Förderkanal, insbesondere für Selbstladewagen, mit einer Vielzahl von in ihrer Arbeitstellung in den Förderkanal quer hineinragenden, drehbeweglich gelagerten und beim Auftreffen von Fremdkörpern aus der Arbeitsstellung entgegen der Rückstellkraft einer Feder einer Rückstellvorrichtung vorübergehend ausweichenden Messern, auf deren Rückseite anschließend an eine der Arbeitsstellung entsprechende Rast jeweils eine Kurvenbahn sowie gestellseitig ein mit der Kurvenbahn zusammenarbeitendes federbelastetes Rastelement vorgesehen ist.

Bei bekannten Schneidvorrichtungen dieser Art (DE-AS 27 34 462, DE-AS 19 16 046, Fig. 6) schwenken die Messer beim Auftreffen eines Fremdkörpers entgegen der Wirkung der Feder zurück und geben damit vorübergehend einen Teil des Förderkanals frei, um den Fremdkörper passieren zu lassen. Ein vollständiges Ausschwenken einzelner Messer, sei es von Hand zum Einstellen der Schnittbreite des Ladegutes, sei es vorübergehend unter der Einwirkung großer Fremdkörper, um sie passieren zu lassen, ist nicht möglich.

Bei einer anderen Art von Schneidvorrichtungen (DE-AS 19 16 046, Fig. 1 bis 5 und 7) können die Messer aus der Arbeitsposition in eine durch eine weitere Rast gebildete Ruhestellung geschwenkt werden, in der sie sich vollständig außerhalb des Förderkanals befinden. Dies kann entweder von Hand zum Einstellen der Schnittbreite des Ladegutes oder selbsttätig zur Fremdkörpersicherung geschehen. Dabei ist aber keine selbsttätige Rückstellung vorgesehen. Vielmehr muß nach einem Ausschwenken eines oder mehrerer Messer die Rückstellung in die Arbeitsposition stets von Hand erfolgen. Dies hat eine empfindliche Störung des Lade- und Schneidvorgangs zur Folge, da häufig erst relativ spät gemerkt wird, daß ein Fremdkörper eine Messerverschwenkung aus ihrer Arbeitsposition bewirkt.

Bekannt ist weiterhin eine Schneidvorrichtung abweichender Gattung (DE-U 78 36 824), bei der die Schneidmesser über einen Schwenkrahmen in ihrer Gesamtheit gegen eine Überlastung durch Steine oder dergleichen abgesichert sind. Zu diesem Zweck ist der die Messer tragende Schwenkrahmen beim Auftreffen von Fremdkörpern auf die Messer gegen die Kraft von Federn schwenkbar, die den Rahmen und damit die Messer nach dem Passieren der Fremdkörper selbsttätig in die Arbeitsstellung zurückführen. Da stets sämtliche Messer ausschwenken, kann relativ viel Halmgut ungeschnitten den Förderkanal passieren. Eine unterschiedliche Schnittlängenwahl ist nur durch den Ausbau einer Anzahl von Schneidmesser möglich.

Der Erfindung liegt die Aufgabe zugrunde, die Schneidvorrichtung der eingangs genannten Gattung so weiter auszubilden, daß sie sowohl ein Einstellen der Schnittbreite des Ladegutes erlaubt als auch einen Schutz gegen Fremdkörpereinwirkung sicherstellt; dabei aber durch nur vorübergehendes Ausschwenken aus dem Förderkanal in dem für das Passieren des Fremdkörpers notwendigen Umfang garantiert, daß anschließend eine selbsttätige Rückstellung erfolgt.

Diese Aufgabe wird erfindungsgemäß dadurch gelöst, daß das Rastelement als Rolle ausgebildet ist, die auf der Kurvenbahn läuft, wobei anschließend an die Kurvenbahn eine zweite Rast vorgesehen ist, die einer Außerbetriebstellung des betreffenden Messers entspricht, in der die Messer, gegebenenfalls von Hand, überführbar sind, und in der dieses den Förderkanal vollständig freigibt. Ein selbsttätiges Ausschwenken von Messern aufgrund des Auftreffens eines Fremdkörpers verändert nur bei einer geringen Menge von gefördertem Halmgut die Schnittbreite, da die Messer auch beim Passieren eines besonders großen Fremdkörpers nicht die der Außerbetriebstellung entsprechende Rast erreichen können und folglich sogleich selbsttätig in ihre der Arbeitsstellung entsprechende erste Rast zurückgeführt werden.

Eine bevorzugte Ausführungsform der Erfindung ist im wesentlichen dadurch gekennzeichnet, daß die Rolle an einem verschwenkbar gelagerten Führungshebel angeordnet ist, an dem die die Rückstellkraft erzeugende Feder angreift.

Weitere Einzelheiten, Vorteile und Merkmale der Erfindung ergeben sich aus der folgenden Beschreibung und der Zeichnung, auf die bezüglich aller nicht im Text beschriebenen Einzelheiten ausdrücklich verwiesen wird. Es zeigt:

Fig. 1   einen Längsschnitt durch eine erfindungsgemäße Schneidvorrichtung mit von Zugfedern beaufschlagten Führungshebeln,

Fig. 2   eine Vorderansicht der in Fig. 1 gezeigten Schneidvorrichtung,

Fig. 3   einen Längsschitt durch eine erfindungsgemäße Schneidvorrichtung mit von Druckfedern beaufschlagten Führungshebeln und

Fig. 4   einen Längsschnitt durch eine erfindungsgemäße Schneidvorrichtung mit einem von einer Biegefeder beaufschlagten Führungshebel.

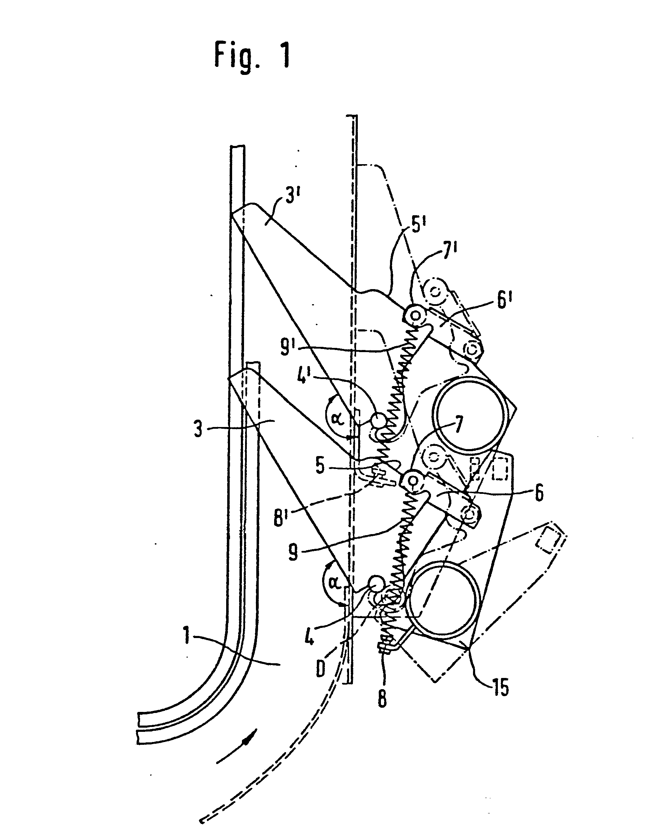

Fig. 1 zeigt einen Längsschnitt durch einen Förderkanal 1, in dem an einer nicht gezeigten umlaufenden Kette befestigte, ebenfalls nicht veranschaulichte Förderzinken zum Transport des Halmgutes in der durch einen Pfeil angegebenen Richtung verlaufen. Zum Zerkleinern des Halmgutes sind zwei quer zum Kanal angeordnete Reihen drehbeweglich gelagerter Messer vorgesehen. Ein zur unteren Reihe gehörendes Messer 3 mit einem Drehpunkt 4 und ein zur oberen Reihe gehörendes Messer 3' mit einem Drehpunkt 4' sind auf einem Zapfen mittels eines sogenannten Einfädel-Schlüssellochs so angeordnet, daß sie in den Kanal 1 hineinragen. Auf der Rückseite eines jeden Messers befindet sich eine von zwei Vertiefungen begrenzte Kurvenbahn 5 bzw. 5'. Auf dieser Kurvenbahn läuft eine an einem von einer Zugfeder 9 bzw. 9' beaufschlagten Führungshebel 6 bzw. 6' befestigte Rolle 7 bzw. 7'. Die Kurvenbahn 5 bzw. 5' und die ihr zugeordnete Rolle 7 bzw. 7' sind derart ausgebildet, daß das Messer 3 bzw. 3' den Förderkanal in einem zur Förderrichtung stumpfen Winkel α vollständig durchsetzt und sich dann in Arbeitsstellung befindet, wenn die Rolle 7 bzw. 7' in der hinteren, die Kurvenbahn begrenzenden, eine erste Rolle bildenden Vertiefung eingerastet ist. Dagegen ist das Messer vollständig aus dem Förderkanal 1 ausgeschwenkt und damit in Außerbetriebsstellung, wenn die Rolle 7 bzw. 7' in der vorderen, die Kurvenbahn begrenzenden, eine zweite Rast bildenden Vertiefung eingerastet ist.

Durch die von zwei Vertiefungen begrenzte Kurvenbahn wird erreicht, daß die Arbeitsstellung und die Außerbetriebstellung der Messer durch Raststellungen entsprechend den ersten bzw. zweiten Rasten definiert sind, d.h. zum Ausschwenken aus der Arbeitsstellung bzw. der Außerbetriebstellung ist eine Mindestkraft notwendig. Diese Mindestkraft ist durch verstellbare Anlegepunkte 8 bzw. 8' der Zugfedern, von denen in der Figur nur jeweils die vordere Zugfeder 9 bzw. 9' gezeigt ist, einstellbar. Die durch die zweite Rast definierte Außerbetriebstellung bietet somit die Möglichkeit, einzelne Messer oder eine ganze Messerreihe zum Einstellen der Schnittbreite des Halmgutes vollständig aus dem Förderkanal 1 auszuschwenken.

Wird ein Messer durch das Auftreffen eines Fremdkörpers und den hierdurch entstehenden hohen Förderdruck aus der der Arbeitsstellung entsprechenden ersten Rast ausgeschwenkt, so entsteht durch die Ausbildung der Kurvenbahn und die Zuordnung der federbelasteteten Rolle eine Kraft bzw. ein Drehmoment, das das Messer nach dem Passieren des Fremdkörpers wieder in die Arbeitsstellung zurückschwenkt. Hierbei sind die beiden die Kurvenbahn begrenzenden Vertiefungen so ausgebildet, daß das Messer praktisch fast vollständig aus dem Förderkanal ausschwenken kann, um auch große Fremdkörper passieren zu lassen.

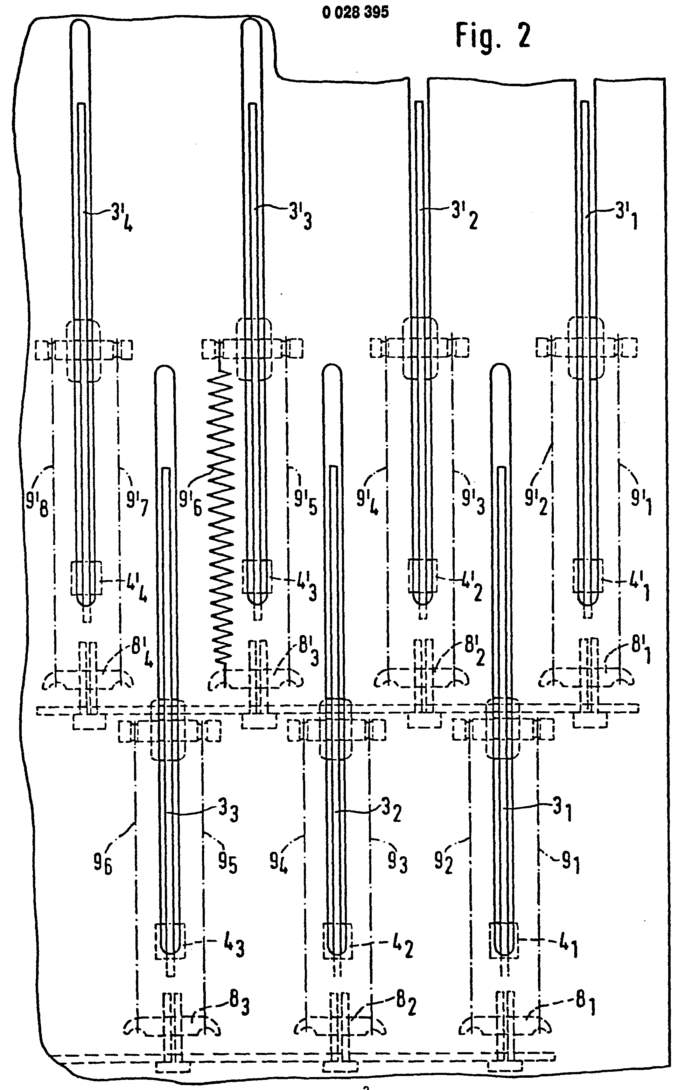

Fig. 2 zeigt eine Vorderansicht der beiden Messerreihen. Die beiden Messerreihen sind in Bezug zueinander versetzt. Der kompakte Rückstellmechanismus mit Zugfedern $9_1$, $9_2$ ... $9'_1$, $9'_2$ ... usw. erlaubt eine derart dichte Anordnung von Messern $3_1$, $3_2$ ... $3'_1$, $3'_2$ ... usw., daß Schnittbreiten in der Größenordnung von 40 mm möglich sind.

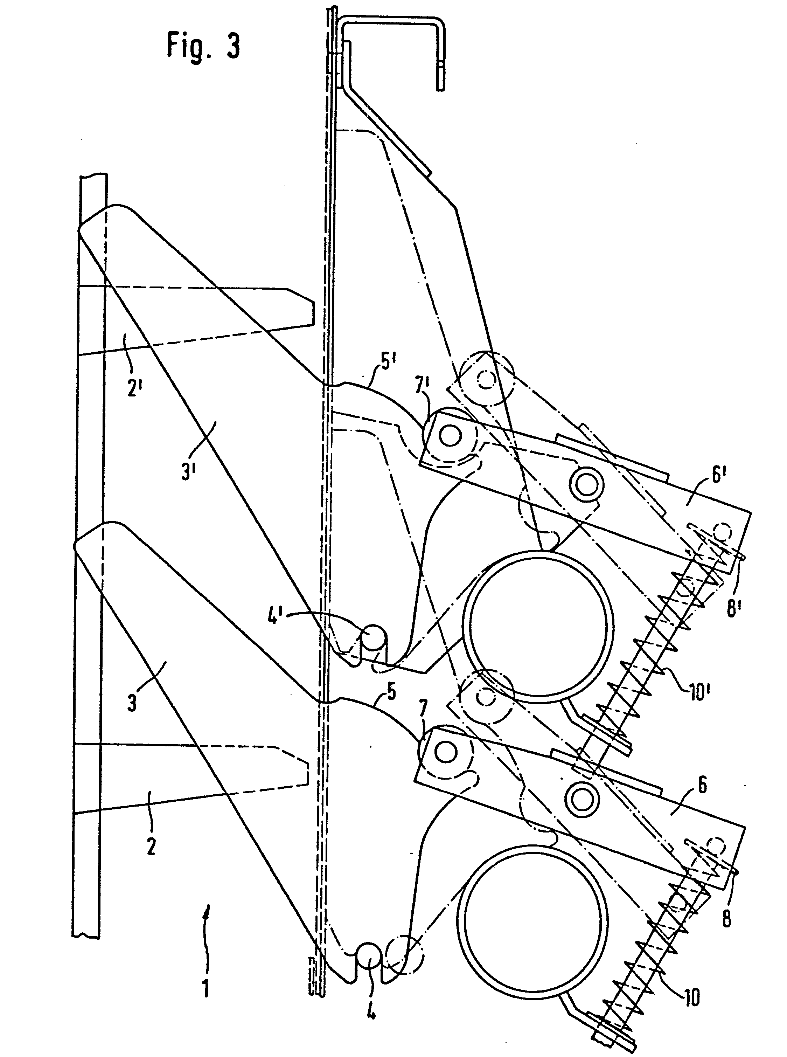

Fig. 3 zeigt eine weitere Ausführungsform der erfindungsgemäßen Schneidvorrichtung, bei der im Interesse einer erhöhten Staubsicherheit die beiden Zugfedern durch eine Druckfeder 10 bzw. 10' ersetzt sind. Ansonsten entsprechen Aufbau und Bezugszeichen denjenigen in Fig. 1; in dieser Darstellung sind allerdings die in Fig. 1 nicht gezeigten Förderzinken 2, 2' veranschaulicht.

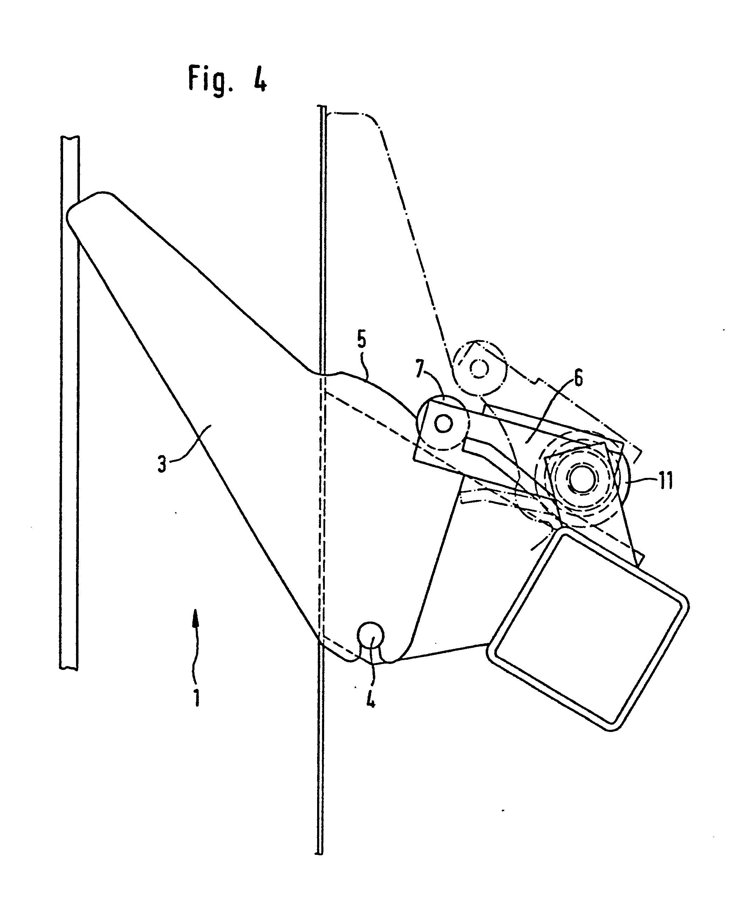

Fig. 4 zeigt eine weitere Ausführungsform der erfindungsgemäßen Schneidvorrichtung. Um eine besonders kompakte Anordnung der Messerreihen zu ermöglichen, ist hier jedoch der Führungshebel 6 durch eine Biegefeder 11 belastet.

Wie die vorstehende Erläuterung des Aufbaues und der Funktionsweise der Schneidvorrichtung erkennen läßt, ermöglicht die Schneidvorrichtung ein Einstellen der Schnittbreite des Halmgutes zum Ausschwenken einzelner Messer oder einer bzw. mehrerer Messerreihen in eine Außerbetriebstellung.

Die Fremdkörpersicherung durch Ausschwenken der Messer über die gesamte Förderkanalbreite verhindert einen vorzeitigen Verschleiß der Messer und gewährleistet durch die selbsttätige Rückstellung nach dem Passieren des Fremdkörpers ein Einhalten der eingestellten Schnittbreite.

Die einfache und kompakte Ausführung der Rückstellvorrichtung ermöglicht nicht nur ein schnelles Auswechseln einzelner Messer aufgrund des Schlüssellochs zum Einfädeln, sondern auch minimale Schnittbreiten von nur 40 mm aufgrund der dichten Anordnung der Messer. Außerdem lassen sich die untere und die obere Messerbreite vereinheitlichen, wodurch die Austauschbarkeit der Messer verbessert wird.

## Patentansprüche:

1. Schneidvorrichtung an einem dem Transport von Halmgut dienenden Förderkanal (1), insbesondere für Selbstladewaten, mit einer Vielzahl von in ihrer Arbeitsstellung in den Förderkanal quer hineinragenden, drehbeweglich gelagerten und beim Auftreffen von Fremdkörpern aus der Arbeitsstellung entgegen der Rückstellkraft einer Feder (9, 10, 11) einer Rückstellvorrichtung vorübergehend ausweichenden Messern (3, 3'), auf deren Rückseite anschließend an eine der Arbeitsstellung entsprechende Rast jeweils eine Kurvenbahn (5, 5') sowie gestellseitig ein mit der Kurvenbahn zusammenarbeitendes federbelastetes Rastelement vorgesehen ist, dadurch gekennzeichnet, daß das Rastelement als Rolle (7, 7') ausgebildet ist, die auf der Kurvenbahn (5, 5') läuft, wobei anschließend an die Kurvenbahn eine zweite Rast vorgesehen ist, die einer Außerbetriebstellung der betreffenden Messer (3, 3') entspricht, in die die Messer gegebenenfalls von Hand, überführbar sind, und in der dieses den Förderkanal (1) vollständig freigibt.

2. Schneidvorrichtung nach Anspruch 1, dadurch gekennzeichnet, daß die rolle (7, 7') an einem verschwenkbar gelagerten Führungshebel (6, 6') angeordnet ist, an dem die die Rückstellkraft erzeugende Feder 9; 10; 11) angreift.

## Claims

1. Cutting apparatus on a straw conveyor duct (1), particularly for self-loading vehicles, having a plurality of knives (3, 3') which project transversely into the conveyor duct in their working position, are pivotally mounted and, on encountering foreign bodies, yield from the working position against the restoring force of a return spring (9, 10, 11), and at the back of each of which, leading from a notch corresponding to the working position, there is provided a cam track (5, 5') and also, at the frame side, a spring-loaded detent cooperating with the cam track, characterised in that the detent has the form of a roller (7, 7') which runs on the cam track (5, 5') in continuation of which track there is provided a second notch which corresponds to an inoperative position of the respective knife (3, 3'), into which position the knives can be displaced, possibly by hand, and in which they clear the conveyor duct (1) completely.

2. Cutting apparatus as claimed in Claim 1, characterised in that the roller (7, 7') is arranged on a pivotally mounted guide lever (6, 6') on which the return spring (9, 10, 11) acts.

## Revendications

1. Dispositif de coupe sur un conduit de transport (1) servant au transport de tiges, en particulier pour des chariots autochargeurs, avec un certain nombre de lames (3, 3') dépassant transversalement à leur position de travail, dans le conduit de transport, logées mobiles en rotation et s'écartant temporairement, en présence de corps étrangers, de leur position de travail contre la force de retour d'un ressort (9, 10, 11) d'un dispositif de retour, sur le côté arrière desquelles se raccordant à un cran d'arrêt correspondant à la position de travail, est prévu un chemin incurvé (5, 5') ainsi que côté châssis, un élément d'arrêt chargé par ressort coopérant avec le chemin incurvé, caractérisé en ce que l'élément d'arrêt à la forme d'un galet (7, 7'), qui se déplace sur le chemin incurvé (5, 5') et en outre, un second cran d'arrêt est prévu sur le chemin incurvé, qui correspond à une position hors de fonctionnement de la lame correspondante (3, 3') à laquelle les lames peuvent être conduites, le cas échéant à la main, et où celles-ci libèrent totalement le conduit de transport (1).

2. Dispositif de coupe selon la revendication 1 caractérisé en ce que les galets (7, 7') sont disposés sur un levier de guidage (6, 6') logé pivotant, sur lequel agit un ressort produisant la force de retour (9; 10; 11).

Fig. 1

0 028 395

Fig. 2

Fig. 3

0 028 395

# Fig. 4